**Europäisches Patentamt**

**European Patent Office**

**Office européen des brevets**

(19)

(11) Veröffentlichungsnummer: **0 110 872
B1**

(12) **EUROPÄISCHE PATENTSCHRIFT**

(45) Veröffentlichungstag der Patentschrift:
**11.05.88**

(21) Anmeldenummer: **83890217.9**

(22) Anmeldetag: **29.11.83**

(51) Int. Cl.⁴: **G 01 L 11/00**

(54) **Hypsometer.**

(30) Priorität: **06.12.82 AT 4419/82**

(43) Veröffentlichungstag der Anmeldung:
**13.06.84 Patentblatt 84/24**

(45) Bekanntmachung des Hinweises auf die Patenterteilung:
**11.05.88 Patentblatt 88/19**

(84) Benannte Vertragsstaaten:
**DE FR GB**

(56) Entgegenhaltungen:
**AT - B - 354 785
GB - A - 842 037
US - A - 3 276 262**

(73) Patentinhaber: **ELIN-UNION Aktiengesellschaft für
elektrische Industrie, Penzinger Strasse 76, A-1141 Wien
(AT)**

(72) Erfinder: **Aigner, Franz, Dingelstedtgasse 6/14,
A-1150 Wien (AT)**

(74) Vertreter: **Krause, Peter, Penzinger Strasse 76,
A-1141 Wien (AT)**

**Beschreibung**

Die Erfindung betrifft ein Hypsometer zur Messung des Umgebungsdruckes, insbesondere des Luftdruckes, das aus einem gegebenenfalls geheizten Behälter, der teilweise mit Flüssigkeit gefüllt ist, besteht, in dem ein bis auf den Behälterboden reichender aus saugfähigem Material bestehender Docht angeordnet ist, der an dem mit Luft umgebenen Ende mit einem vom Docht umhüllten Thermistor versehen ist und wobei der Docht mit einem Hüllrohr umgeben ist, dessen unteres Ende mit einer Öffnung versehen ist.

Hypsometer sind Einrichtungen zur Messung des Luftdruckes. Dabei wird von der physikalisch bedingten Tatsache Gebrauch gemacht, dass sich die Siedetemperatur einer Flüssigkeit mit dem Umgebungsdruck ändert. Es kann daher, wenn die Dampfdruckkurve der Hypsometerflüssigkeit bekannt ist und die Siedetemperatur mit ausreichender Genauigkeit gemessen wird, der Umgebungsdruck, insbesondere Luftdruck berechnet werden.

Mit Hilfe des Hypsometers wird also die Druckmessung auf eine Temperaturmessung zurückgeführt, und diese wiederum, wenn als Temperatursensor z.B. ein Thermistor verwendet wird, auf eine Widerstandsmessung.

In meteorologischen Radiosonden ist die Verwendung des Hypsometers bereits seit längerer Zeit gebräuchlich. Hier wirkt sich besonders der Umstand günstig aus, dass der Widerstand der als Temperatursensoren verwendeten Thermistoren bei abnehmender Temperatur, einer in etwa logarithmischen Funktion folgend, immer grösser wird.

Die Auflösung der Druckmessung wird daher in grossen Höhen, also bei niedrigem Druck und damit auch tiefer Siedetemperatur, besser als in Bodennähe. Höhenbestimmungen aus dem gemessenen Luftdruck lassen deshalb bei Verwendung des Hypsometers eine hohe Genauigkeit erwarten, wogegen die Höhenbestimmung bei Verwendung einer Aneroiddose mit zunehmender Höhe immer problematischer wird, weil die Dose Druckänderungen annähernd linear registriert und die Höhendifferenz pro Druckeinheit mit der Höhe etwa logarithmisch zunimmt.

Um die genannten Eigenschaften eines Hypsometers ausnützen zu können ist aber sowohl beim Aufbau wie auch beim Betrieb einigen Fakten Rechnung zu tragen. Es versteht sich von selbst, dass der Thermistor nur dann die Siedetemperatur annehmen kann, wenn es sich zur Gänze im siedenden Bereich der Hypsometerflüssigkeit niedrigsiedender Flüssigkeiten der Frigen- oder Freongruppe befindet und jeder Einfluss der Umgebungstemperatur ausgeschaltet ist.

Ausserdem ist sicherzustellen, dass die Flüssigkeit auch wirklich siedet. Dazu ist entweder durch eine Heizung oder aus der Umgebungswärme der Flüssigkeit Energie zuzuführen. Bei ständig abnehmendem Druck, wie das während eines Radiosondenaufstieges normalerweise der Fall ist, wird, infolge der ständig tiefer werdenden Siedetemperatur, eine Grossteil der Siedeenergie aus der in der Flüssigkeit vorhandenen latenten Wärme entnommen. Der Rest kann aus der Umgebungswärme zugeführt werden. Aber auch bei Radiosonden ist, zumindest zeitweise, zuverlässiger statischer Betrieb erwünscht, um nämlich vor dem Aufstieg das Hypsometer mit dem Bodendruck vergleichen und damit überprüfen zu können.

Aus der AT-PS Nr. 354 785 ist ein Hypsometer wie nachstehend beschrieben, bekannt.

Üblicherweise befindet sich der Thermistor in einem Docht aus saugfähigem Material, wie Baumwolle, Löschpapier oder dgl., welcher mit seinem unteren Ende bis auf den Boden des Behälters reicht. Die hochgesaugte Flüssigkeit siedet im Docht und bringt so den Thermistor auf die Siedetemperatur. Der Teil des Dochtes, welcher sich unterhalb des Thermistor befindet, wird manchmal mit einer Umhüllung versehen, welche ausser der Siedezone nur das Unterstehende des Dochtes freilässt. Dadurch wird erreicht, dass die Flüssigkeit nicht schon auf ihrem Weg vom unteren Ende des Dochtes zum Thermistor verdampft.

Die Grösse der als Siedefläche zur Verfügung stehenden freien Oberfläche des Dochtes ist nicht ohne Einfluss auf die Messgenauigkeit. Bei grosser Oberfläche und relativ hoher Umgebungstemperatur kann u.U. die Flüssigkeit schneller verdampfen als sie durch den Docht nachgesaugt wird, dadurch wäre aber ein Teil der Siedefläche nicht von der siedenden Flüssigkeit benetzt und es wird damit ungewiss, ob sich der Thermistor zur Gänze in der siedenden Flüssigkeit befindet. In diesem Fall würde der Thermistor eine höhere Temperatur als die Siedetemperatur der Flüssigkeit registrieren. Bei niedriger Umgebungstemperatur und ungenügender Heizung kann es hingegen geschehen, dass der Siedevorgang der Flüssigkeit zu sehr abkühlt und sich dadurch selbst stoppt. Kann nun genügend Aussenluft an die Siedefläche herankommen so wird auf der Oberfläche des Siedebereiches die Flüssigkeit zwar nicht mehr sieden, aber verdunsten und sich, wie auch den Thermistor noch weiter abkühlen. Je schneller die Flüssigkeit verdunstet und je mehr verdunstet um so kälter wird es dabei. In diesem Fall registriert der Thermisor eine tiefere Temperatur als die Siedetemperatur der Flüssigkeit, daraus folgt, dass die Siedefläche des Dochtes möglichst klein sein soll und dass die Umgebungstemperatur sowie die Aussenluft von der Siedezone weitgehend ferngehalten werden müssen. Die Grösse der Siedefläche wird aber weitgehend von der Art und Form des Dochtes, sowie von der Grösse des Thermistors bestimmt. Bei einem ideal an den Thermistor angepassten Docht bestimmt nur mehr der Thermistor die Grösse der Siedefläche.

Ein weiterer Nachteil ist, dass Siedetemperatur wie sie in Bodennähe auftreten, die Auflösung der Druckmessung ungenügend machen. Durch geeignete Materialzusammensetzung des Thermistors lässt sich zwar der Widerstand erhöhen, doch leidet darunter wiederum die exakte Berechenbarkeit des Thermistors. Eine weitere Schwierigkeit ist die Unmöglichkeit, den Luftzutritt zur Siedefläche gänzlich zu unterbinden, da ja nur bei einem völligen Druckausgleich die Druckmessung überhaupt möglich wird. Die Auswirkungen des Luftzutritts beeinträchtigen vor allem Messungen in Bodennähe. Bei der geringen Luftdichte in grösserer Höhe erfolgt nur eine geringe Verdunstung des Frigens und die Abkühlung bleibt vernachlässigbar klein.

Die Anordnung des an sich bekannten Hüllrohres verhindert zwar, dass der grösste Teil der Flüssigkeit schon verdampft bevor er noch die Höhe des Thermistors erreicht hat, doch ist die damit verbundene Verbesserung noch nicht ausreichend. Auch das Anbringen einer wärmedämmenden Kappe um den Verdampfungsbereich des Hypsometers genügt nicht.

Aufgabe der Erfindung ist es, die obigen Nachteile zu vermeiden und die Genauigkeit des Hypsometers im statischen Bereich soweit zu erhöhen, dass der verbleibende Restfehler bei der Verwendung in Radiosonden vernachlässigt werden kann.

Gemäss der Erfindung ist das eingangs aufgezeigte Hypsometer dadurch gekennzeichnet, dass das in die Flüssigkeit ragende Ende des Dochtes frei vom Hüllrohr ist und das mit dem Thermistor versehene Ende des Dochtes von Hüllrohr umhüllt ist, und dass das Hüllrohr aus schlecht wärmeleitendem Material besteht.

Mit der Erfindung ist es erstmals möglich auch die Auflösung der Druckmessung in Bodennähe durchzuführen. Der Vorteil der Erfindung liegt darin, dass die Siederfläche auf die Oberfläche des kurzen aus dem Hüllrohr herausragenden Dochtstückes reduziert wird, wenn das Hüllrohr mit dem oberen Ende des Dochtes abschliesst, verbleibt nur mehr der lichte Querschnitt des Hüllrohres als Siedefläche. Die Menge der verdampfenden Flüssigkeit wird dadurch verringert und der Docht kann immer genügend Flüssigkeit nachsaugen.

Da das Hüllrohr oben offen ist, herrscht in seinem Inneren der gleiche Druck wie aussen. Die Flüssigkeit kann daher niemals wärmer sein als die dem Druck entsprechende Siedetemperatur. Sie würde ansonsten sofort zu sieden beginnen und sich damit bis zur Siedetemperatur abkühlen. Dabei entstehender Dampf wird beim Hochsteigen im Hüllrohr durch die bereits höher gesaugte kältere Flüssigkeit wieder kondensiert, sodass sich im gesamten die genaue Siedetemperatur einstellt. Da das Hüllrohr aus schlecht wärmeleitendem Material besteht, findet auch praktisch kein Temperaturaustausch durch die Rohrwand statt. Das wirkt sich auch bei niedrigen Temperaturen günstig aus, weil die Flüssigkeit den Thermistor mit der Siedetemperatur erreicht und die Fläche, an der Luft zum Docht zutreten und Flüssigkeit verdunsten kann, sehr klein und dazu noch hoch über dem Thermistor, in der Bewegungsrichtung der Flüssigkeit liegt. Dadurch wird dem Thermistor die richtige Temperatur durch die nachgesaugte Flüssigkeit schneller zugeführt als der Wärmeentzug durch die Verdunstungsfläche erfolgt.

Nach einer Ausgestaltung der Erfindung ist die freie Länge des mit dem Thermistor versehene Ende des Dochtes in gewissen Grenzen veränderbar, wobei der Bereich des Thermistors zum vorwiegenden Teil umhüllt ist. Dadurch kann das Hypsometer an bestimmte Aufgaben besser angepasst werden.

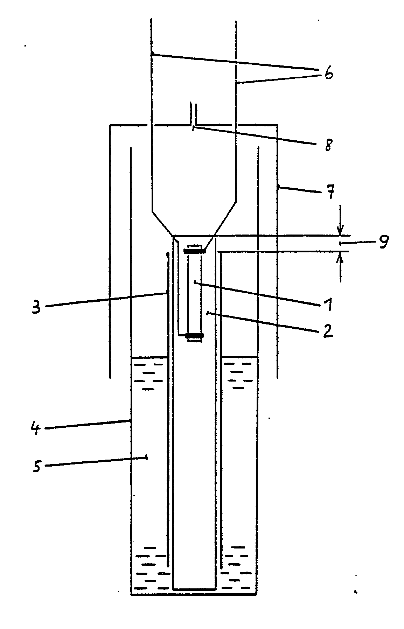

In der Zeichnung ist ein Ausführungsbeispiel der Erfindung dargestellt.

Der Thermistor 1 wird eng von einem Docht 2 umschlossen.

Die kontaktierten Enden 6 des Thermistors 1 treten durch den Docht 2 aus. Der Docht 2 ist vom Hüllrohr 3 umgeben. Die vom Docht 2 durch seine Kapillarwirkung aus dem Vorratsbehälter 4 hochgesaugte Flüssigkeit 5 tritt nach oben und der Thermistor 1 wird daher zur Gänze von der siedenden Flüssigkeit umgeben.

Darüberhinaus kann der Behälter 4 mit einer wärmedämmenden Kappe 7 die eine Druckausgleichsöffnung 8 aufweist, verschlossen sein.

Durch die Anordnung des Hüllrohres 3 kommt nur mehr eine ganz kleine Länge 9, die praktisch auch null sein kann, mit der Umgebungsluft in Berührung.

## Patentansprüche

1. Hypsometer zur Messung des Umgebungsdruckes, insbesondere des Luftdruckes, das aus einem gegebenenfalls geheizten Behälter (4), der teilweise mit Flüssigkeit (5) gefüllt ist, besteht, in dem ein bis auf den Behälterboden reichender aus saugfähigem Material bestehender Docht (2) angeordnet ist, der an dem mit Luft umgebenen Ende mit einem von Docht (2) umhüllten Thermistor (1) versehen ist und wobei der Docht (2) mit einem Hüllrohr (3) umgeben ist, dessen unteres Ende mit einer Öffnung versehen ist, dadurch gekennzeichnet, dass das in die Flüssigkeit (5) ragende Ende des Dochtes (2) frei vom Hüllrohr (3) ist und das mit dem Thermistor (1) versehene Ende des Dochtes (2) vom Hüllrohr (3) umhüllt ist, und dass das Hüllrohr (3) aus schlecht wärmeleitendem Material besteht.

2. Hypsometer nach Anspruch 1, dadurch gekennzeichnet, dass die freie Länge des mit dem Thermistor (1) versehenen Endes des Dochtes (2) in gewissen Grenzen veränderbar ist, wobei der Bereich des Thermistors (1) zum vorwiegenden Teil umhüllt ist.

3. Hypsometer nach Anspruch 1, dadurch gekennzeichnet, dass das mit dem Thermistor (1) versehene Ende des Dochtes (2) bis zur Dochtoberkante von Hüllrohr (3) umhüllt ist.

## Claims

1. Hypsometer for measuring the ambient pressure, in particular the atmospheric pressure, which consists of a container (4), which may be heated, is partially filled with liquid (5) and contains a wick (2), which extends as far as the container base, consists of an absorbent material and is provided at the end which is surrounded by the air with a thermistor (1) enveloped by the wick (2), the wick (2) being surrounded by an encasing tube (3), the lower end of which is provided with an opening, characterised in that the end of the wick (2) which projects into the liquid (5) is free of the encasing tube (3) and the end of the wick (2) which is provided with the thermistor (1) is enveloped by the encasing tube (3), and that the encasing tube (3) consists of a material with poor heat-conducting properties.

2. Hypsometer according to claim 1, characterised in that the free length of the end of the wick (2) which is provided with the thermistor (1) can be altered within certain limits, the major part of the area of the thermistor (1) being enveloped.

3. Hypsometer according to claim 1, characterised in that the end of the wick (2) which is provided with the thermistor (1) is enveloped by the encasing tube (3) as far as the upper edge of the wick.

**Revendications**

1. Hypsomètre pour la mesure de la pression ambiante, en particulier de la pression de l'air, constitué par un récipient (4) éventuellement chauffé qui est partiellement rempli de liquide, dans lequel est disposée une mèche (2) en matière absorbante qui plonge jusqu'au fond du récipient, qui est munie à l'extrémité entourée d'air d'une thermistance (1) elle-même enveloppée par la mèche (2), la mèche (2) étant entourée d'un tube gaine (3) dont l'extrémité inférieure est munie d'une ouverture, caractérisé en ce que l'extrémité de la mèche (2) qui plonge dans le liquide (5) est dégagée du tube gaine (3), l'extrémité de la mèche (2) qui est munie de la thermistance (1) étant entourée par le tube gaine (3), et en ce que le tube gaine (3) est fait d'une matière mauvaise conductrice de la chaleur.

2. Hypsomètre selon la revendication 1, caractérisé en ce que la longueur libre de l'extrémité de la mèche (2) qui est munie de la thermistance (1), peut être modifiée dans certaines limites, la région de la thermistance (1) étant enveloppée en majeure partie.

3. Hypsomètre selon la revendication 1, caractérisé en ce que l'extrémité de la mèche (2) qui est munie de la thermistance (1), est entourée du tube gaine (3) jusqu'au bord supérieur de la mèche.